# EUROPÄISCHE PATENTSCHRIFT

(11) **EP 0 908 360 B1**
(45) Veröffentlichungstag und Bekanntmachung des Hinweises auf die Patenterteilung: **10.12.2003**
(21) Anmeldenummer: 98114437.1
(22) Anmeldetag: 01.08.1998
(51) Int. Cl.: B60R 22/24, B60R 21/055, B60R 22/20

(54) **Umlenkbeschlag für Sicherheitsgurte von Fahrzeugen, insbesondere Kraftfahrzeugen**
Guide fitting for safety belts for vehicles, in particular motor vehicles
Pièce de renvoi pour ceinture de sécurité pour véhicules, en particulier véhicules automobiles

(30) Priorität: 11.10.1997 DE 19745016
(43) Veröffentlichungstag der Anmeldung: 14.04.1999
(73) Patentinhaber: Dr.Ing.h.c. F. Porsche Aktiengesellschaft, 70435 Stuttgart (DE)
(72) Erfinder: Bögge, Herbert, 75446 Wiernsheim (DE); Dietrich, Günter, 71691 Freiberg (DE); Strähle, Jürgen, 71732 Tamm (DE); Menking, Michael, Dr., 75242 Neuhausen (DE)

(56) Entgegenhaltungen:
- WO-A-96/38293
- DE-A- 3 308 531
- DE-A- 19 803 025
- FR-A- 2 660 264
- US-A- 5 529 344

## Beschreibung

Die Erfindung bezieht sich auf einen Umlenkbeschlag für Sicherheitsgurte von Fahrzeugen, insbesondere Kraftfahrzeugen, gemäß dem Oberbegriff des Patentanspruchs 1.

Aus der DE 33 08 531 C2 geht ein Umlenkbeschlag für Sicherheitsgurte von Fahrzeugen, insbesondere Kraftfahrzeugen hervor, der mittels einer Befestigungsschraube am Fahrzeugrahmen in Lage gehalten ist. Der Kopf der Befestigungsschraube wird von einer Abdeckkappe aus Kunststoff abgedeckt, wobei die Abdeckkappe an einer Deckplatte des Umlenkbeschlages in Lage gehalten ist. Eine derartige Abdeckkappe dient lediglich zur optischen Verkleidung des Umlenkbeschlages und der Befestigungsschraube. Diese Abdeckkappe ist jedoch nicht dazu geeignet, bei einem Kopfaufprall eines Fahrzeuginsassen auf den Umlenkbeschlag bzw. den Kopfabschnitt der Befestigungsschraube in ausreichendem Maße Aufprallenergie aufzunehmen, so dass bei einem Kopfaufprall auf den Umlenkbeschlag relativ schwere Kopfverletzungen des Fahrzeuginsassen auftreten können.

Zur Minderung der Kopfverletzungen bei einem Kopfaufprall auf den Umlenkbeschlag eines Sicherheitsgurtes ist es aus der FR 26 60 264 A1 bekannt, eine aus Kunststoff gefertigte Abdeckkappe energieaufnehmend auszubilden. Die Abdeckkappe verläuft im Kopfaufschlagbereich mit Abstand zum Kopf der Befestigungsschraube. Durch Zusammendrücken der Abdeckkappe soll bei einem Kopfaufprall Aufprallenergie aufgenommen werden. Auch mit dieser Konstruktion ist nur eine relativ geringe Energieaufnahme bei einem Kopfaufprall realisierbar.

Die US 5,529,344 zeigt einen gattungsgemässen Umlenkbeschlag für Sicherheitsgurte von Fahrzeugen, insbesondere Kraftfahrzeugen, der mittels einer Befestigungsschraube in Lage gehalten ist, wobei ein Kopfabschnitt der Befestigungsschraube und zumindest ein Teilbereich des Umlenkbeschlages zum Fahrgastraum hin von einer Abdeckkappe verkleidet sind.

Zwischen dem Kopfabschnitt der Befestigungsschraube und der vorgelagerten Abdeckkappe ist ein einstückiges faltenbalgartiges Deformationselement aus dünnwandigem Blech zwischengeschaltet, das am Kopfabschnitt der Befestigungsschraube durch Kleben oder Schweißen in Lage gehalten ist.

Aufgabe der Erfindung ist es, einen mit einer Befestigungsschraube in Lage gehaltenen und von einer vorgelagerten Abdeckkappe verkleideten Umlenkbeschlag eines Sicherheitsgurtes so weiterzubilden, dass bei einem Kopfaufprall eines Fahrzeuginsassen auf den Umlenkbeschlag eine relativ hohe Aufprallenergie aufnehmbar ist, so dass das Verletzungsrisiko für einen Fahrzeuginsassen bei einem Kopfaufprall erheblich reduziert wird.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, dass durch die Anordnung eines zusätzlichen Deformationselementes aus dünnwandigem Blech zwischen dem Kopf der Befestigungsschraube und der vorgelagerten Abdeckkappe eine wirkungsvolle Energieaufnahme bei einem Kopfaufprall erzielt wird.

Das hohlkörperartige Deformationselement ist aus dünnwandigem Aluminium- oder Stahlblech oder einer energieaufnehmenden Struktur (z.B. Metallschaum) gefertigt und in einfacher Weise herstell- und montierbar. Das Deformationselement ist sowohl bei einem ortsfesten Umlenkbeschlag als auch bei einem höhenverstellbaren Umlenkbeschlag anwendbar.

Im Ausführungsbeispiel ist das Deformationselement zweiteilig ausgebildet und setzt sich aus einer Grundplatte und einem aufgesetzten Deformationskörper zusammen. Bei einem höhenverstellbaren Umlenkbeschlag ist das Deformationselement unter Vermittlung eines Tragteils an einem verschiebbaren Verstellglied des Gurthöhenverstellers befestigt. Ferner ist zwischen dem Kopf der Befestigungsschraube und dem darauf aufliegenden Deformationselement eine Fixiereinrichtung für das Deformationselement vorgesehen. Die aus Kunststoff gefertigte Abdeckkappe dient im wesentlichen nur zur Krafteinleitung in das dahinterliegende Deformationselement und nur in sehr geringem Maße zur Energieaufnahme.

Ein Ausführungsbeispiel der Erfindung ist in den Zeichnungen dargestellt und wird im folgenden näher beschrieben.

Es zeigen
- Fig. 1: eine Explosionsdarstellung einer aufrechten Säule eines Kraftfahrzeuges mit einem etwa in Schulterhöhe angeordneten Gurtumlenkbeschlag für einen Sicherheitsgurt, wobei der Gurtumlenkbeschlag an einem Gurthöhenversteller angebracht ist,
- Fig. 2: einen Vertikalschnitt durch die Aufbausäule, den Gurtumlenkbeschlag und den Gurthöhenversteller mit dem erfindungsgemäßen Deformationselement,
- Fig. 3: eine perspektivische Ansicht auf das Deformationselement,
- Fig. 4: eine perspektivische Ansicht auf die Grundplatte des Deformationselementes,

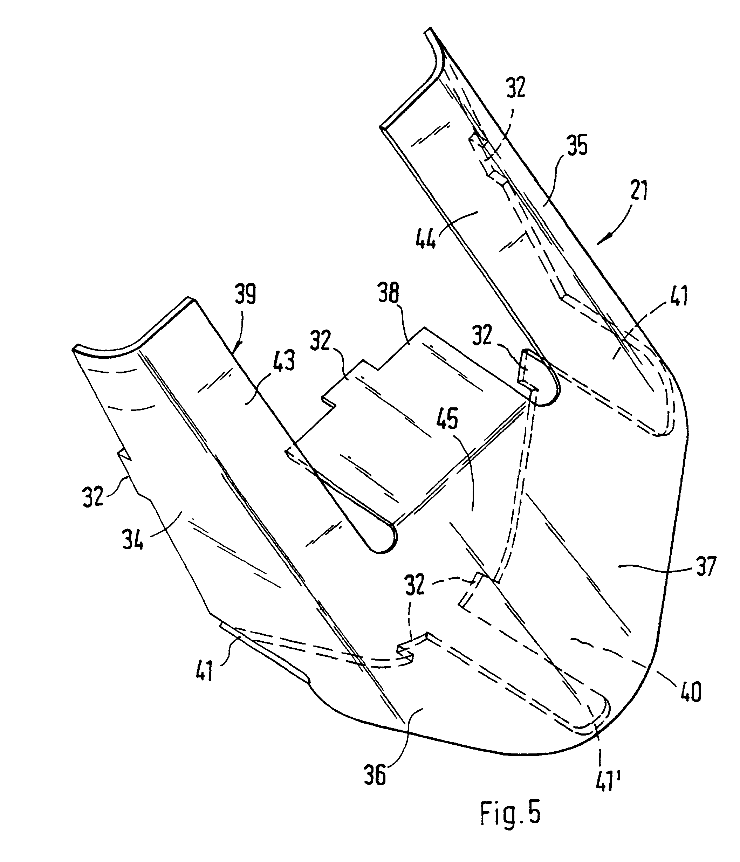

- Fig. 5: eine perspektivische Ansicht auf den auf die Grundplatte aufgesetzten Deformationskörper und
- Fig. 6: eine Einzelheit X der Fig. 2 in größerem Maßstab.

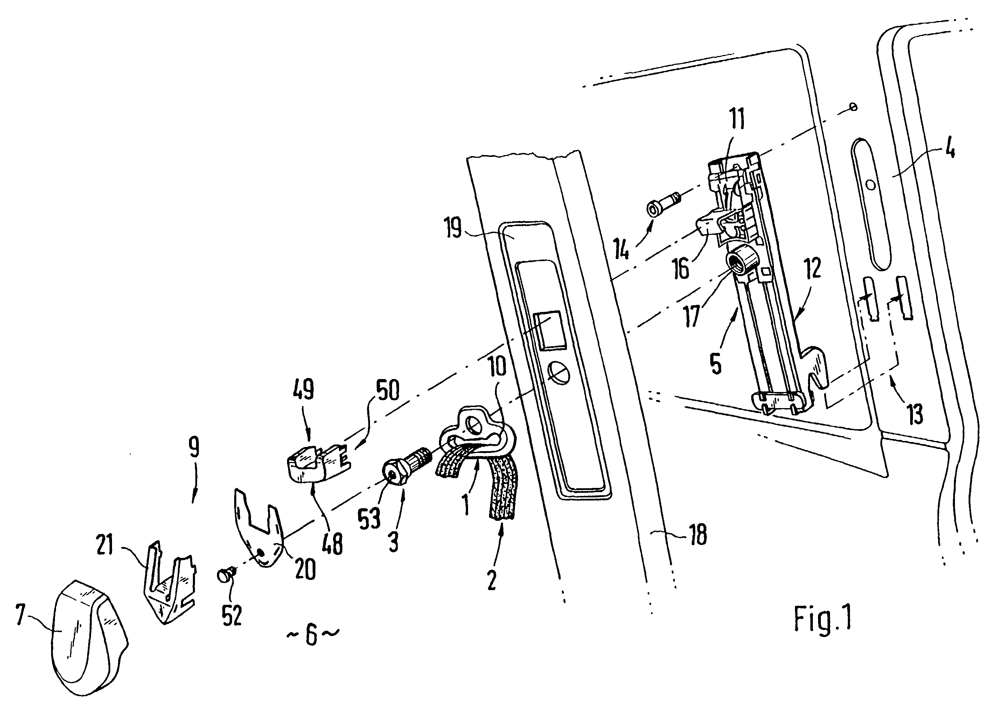

Fig. 1 zeigt in Explosionsdarstellung einen etwa in Schulterhöhe eines Insassen angeordneten Umlenkbeschlag 1 für einen Sicherheitsgurt 2 eines Fahrzeuges, insbesondere Kraftfahrzeuges, wobei der Umlenkbeschlag 1 mittels einer Befestigungsschraube 3 entweder direkt an einer aufrechten Aufbausäule 4 oder einem an der Aufbausäule 4 vorgesehenen Gurthöhenversteller 5 befestigt ist. Der Sicherheitsgurt 2 wird im Ausführungsbeispiel durch einen herkömmlichen Dreipunktsicherheitsgurt gebildet. Auf der einem Fahrgastraum 6 zugekehrten Seite des Umlenkbeschlages 1 ist eine vorgelagerte Abdeckkappe 7 aus Kunststoff vorgesehen, die einen Kopfabschnitt 8 der Befestigungsschraube 3 und zumindest einen Teilbereich des Umlenkbeschlages 1 verkleidet. Damit bei einem Kopfaufprall eines Fahrzeuginsassen auf den Umlenkbeschlag 1 das Verletzungsrisiko des Fahrzeuginsassen reduziert wird, ist erfindungsgemäß vorgesehen, dass zwischen der Befestigungsschraube 3 und der vorgelagerten Abdeckkappe 7 ein hohlkörperartiges Deformationselement 9 aus dünnwandigem Blech zwischengeschaltet ist, das sich bei einem Kopfaufprall plastisch verformt und somit eine relativ hohe Aufprallenergie aufnimmt.

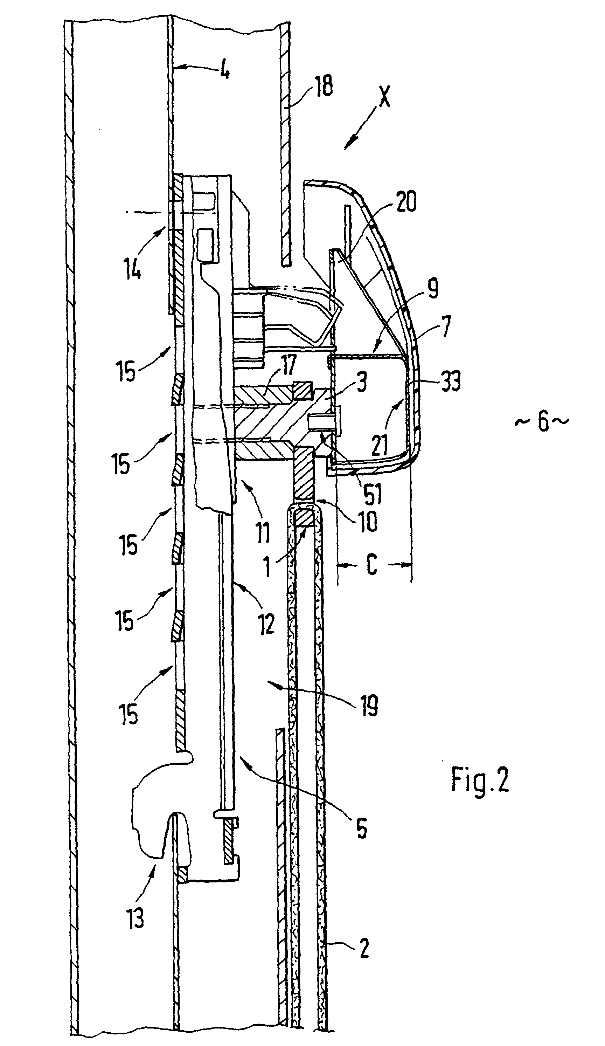

Im Ausführungsbeispiel ist der eine Durchtrittsöffnung 10 für den Sicherheitsgurt 2 aufweisende Umlenkbeschlag 1 an einem Verstellglied 11 des Gurthöhenverstellers 5 befestigt. Der Gurthöhenversteller 5 besteht aus einer langgestreckten, sich in Höhenrichtung erstreckenden Halteschiene 12, die über zumindest eine untere Steckverbindung 13 und eine obere Schraubverbindung 14 an der Aufbausäule 4 festlegbar ist (Fig. 2). Auf der etwa C-förmig profilierten Halteschiene 12 ist das Verstellglied 11 verschiebbar aufgenommen, wobei das Verstellglied 11 in einer von mehreren übereinanderliegend angeordneten Rasten 15 festlegbar ist. Dies erfolgt durch ein am Verstellglied 11 schwenkbar gelagertes, nicht näher dargestelltes Riegelelement, das als Winkelhebel ausgebildet ist. Ein Hebelarm des federbelasteten Winkelhebels greift in eine der Rasten 15 ein, wogegen der andere Hebelarm mit einem verschwenkbaren Betätigungselement 16 des Gurthöhenverstellers 5 in Wirkverbindung steht. Durch Verschwenken des Betätigungselementes 16 wird der Winkelhebel verschwenkt und der dem Betätigungsglied 16 abgekehrte Hebelarm gelangt außer Eingriff mit der Raste 15, so dass sich in dieser Stellung das Verstellglied 11 in Höhenrichtung bewegen lässt. Am Verstellglied 11 ist ferner eine Buchse oder eine Platte mit einem Innengewindeabschnitt vorgesehen, in den die den Umlenkbeschlag 1 tragende Befestigungsschraube 3 eindrehbar ist.

Zwischen der dem Fahrgastraum 6 zugekehrten Seite des Verstellgliedes 11 und der dem Kopfabschnitt 8 der Befestigungsschraube 3 abgekehrten Seite des Umlenkbeschlages 1 ist eine die Befestigungsschraube 3 koaxial umgebende Distanzhülse 17 angeordnet. Die Aufbausäule 4 ist zum Fahrgastraum 6 hin von einem Verkleidungsteil 18 abgedeckt, das im Bereich des Gurthöhenverstellers 5 zumindest eine Ausnehmung 19 aufweist.

Das aus dünnwandigem Stahl- oder Aluminiumblech gefertigte Deformationselement 9 kann einteilig oder mehrteilig ausgebildet sein. Im Ausführungsbeispiel ist eine zweiteilige Ausführung des Deformationselementes 9 dargestellt, das sich aus einer Grundplatte 20 und einem auf die Grundplatte 20 aufgesetzten Deformationskörper 21 zusammensetzt.

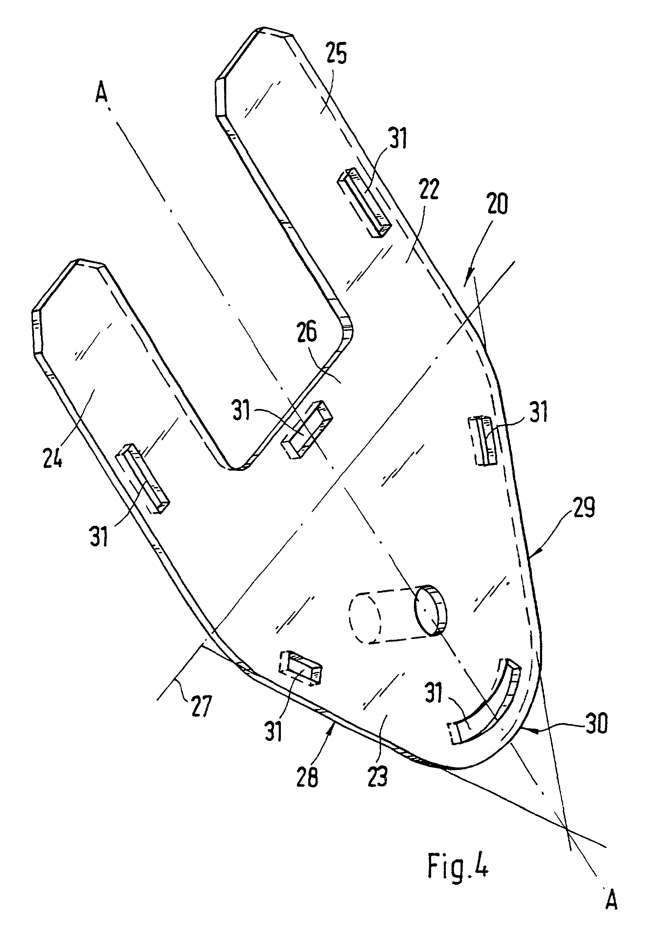

Gemäß Fig. 4 ist die Grundplatte 20 eben ausgebildet und setzt sich aus einem U-förmigen Abschnitt 22 und einem etwa dreieckförmigen Abschnitt 23 zusammen. Der U-förmige Abschnitt 22 umfasst seitliche aufrechte Schenkel 24, 25 und einen querverlaufenden Steg 26. An diesen Steg 26 ist der dreieckförmige Abschnitt 23 angeschlossen. Die theoretische Trennungslinie zwischen U-förmigem Abschnitt 22 und dreieckförmigem Abschnitt 23 ist mit dem Bezugszeichen 27 versehen. Zwei Eckpunkte des dreieckförmigen Abschnitts 23 liegen auf dieser Trennungslinie 27, wogegen der dritte Eckpunkt nach unten zeigt und etwa auf einer aufrechten Mittelebene A-A des Gurthöhenverstellers 5 verläuft. Die beiden schrägverlaufenden Seiten 28, 29 des dreieckförmigen Abschnitts 23 sind durch einen radienförmigen Übergangsbereich 30 miteinander verbunden. Die Grundplatte 20 überragt den Deformationskörper 21 an den Außenseiten der Schenkel 24, 25 sowie den Seiten 28, 29 und den Übergangsbereich 30 um einen geringen Betrag (Maß B). Die Grundplatte 20 und der aufgesetzte Deformationskörper 21 sind zumindest örtlich durch Bördeln, Schweißen, Kleben oder dergleichen miteinander verbunden. Die Grundplatte 20 kann auch eine andere Form haben.

Entsprechend Fig. 4 sind an der Grundplatte 20 örtlich ausgestanzte, längliche Durchbrüche 31 vorgesehen, durch die abgestellte, rechteckförmige Zungen 32 des Deformationskörpers 21 hindurchgeführt sind. Vorstehende Abschnitte der Zungen 32 können auf der Rückseite der Grundplatte 20 umgebogen werden. Der Deformationskörper 21 umfasst eine zumindest abschnittsweise, etwa parallel und mit Abstand C zur Grundplatte 20 ausgerichtete Aufprallfläche 33, die über etwa senkrecht zur Grundplatte 20 sich erstreckende Seitenwände 34, 35, 36, 37, 38 an der Grundplatte 20 abgestützt ist. Das Maß C definiert den zur Energieaufnahme benötigten Deformationsweg. Die Aufprallfläche 33 des Deformationskörpers 9 weist in der Draufsicht gesehen eine ähnliche Form auf wie die darunterliegende Grundplatte 20, d.h. sie setzt sich ebenfalls aus einem etwa U-förmigen Abschnitt 39 und einem dreieckförmigen Abschnitt 40 zusammen. Der dreieckförmige Abschnitt 40 der Aufprallfläche 33 verläuft etwa parallel zur Grundplatte 20, wogegen die Aufprallfläche 33 im Bereich des U-förmigen Abschnitts 39 schräg nach oben außen verläuft. Die aneinandergesetzten Seitenwände 34, 35, 36, 37 sind jeweils durch Aussparungen 41, 41' voneinander getrennt, wobei die Aussparungen 41, 41' zur Grundplatte 20 hin offen sind. Die Aussparungen 41, 41' erstrecken sich annähernd bis zur Aufprallfläche 33, d.h. zwischen Aufprallfläche 33 und Aussparungen 41, 41' erstreckt sich jeweils nur ein schmaler Steg 42. Der Deformationskörper 9 kann auch eine andere Form aufweisen.

Die Seitenwände 34, 35 sind dem U-förmigen Abschnitt 39 der Aufprallfläche 33 zugeordnet und erstrecken sich von der Außenseite der seitlichen Schenkel 43, 44 zur Grundplatte 20 hin. Die Seitenwände 34, 35 weisen entlang ihrer Längserstreckung eine sich kontinuierlich ändernde Höhe auf.

Die dem dreieckförmigen Abschnitt 40 zugeordneten Seitenwände 36, 37 weisen entlang ihrer Längserstreckung eine gleichbleibende Höhe auf. Die Seitenwand 38 ist vom Verbindungssteg 45 des U-förmigen Abschnitts 39 weggeführt und stützt sich mit ihren freien Ende an der Grundplatte 20 ab. Diese Seitenwand 38 weist eine geringe Breite auf als der freigeschnittene Zwischenraum, der durch die Innenkante der Schenkel 24, 25 bzw. 43, 44 von Grundplatte 20 und Aufprallfläche 33 definiert ist.

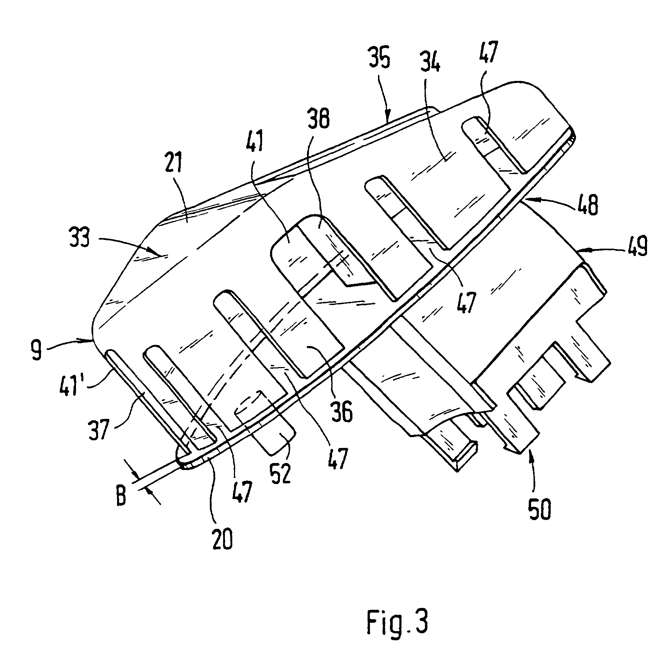

Zur definierten Energieaufnahme können an den Seitenwänden 34 bis 38 des Deformationskörpers 21 zusätzliche Schwächungsbereiche 47 vorgesehen sein, die beispielsweise durch Schlitze oder dergleichen gebildet werden (Fig. 3). Die Anzahl und Größe der Schwächungsbereiche 47 wird je nach Anwendungsfall empirisch ermittelt.

Das im Ausführungsbeispiel dargestellte Deformationselement 9 ist auf das freie, zum Fahrgastraum 6 hin ragende Ende 48 eines Tragteiles 49 aufgesetzt und daran befestigt. Hierzu ist die Grundplatte 20 des Deformationselementes 9 mit dem aus Kunststoff gefertigten Tragteil 49 fest verbunden. Dies kann durch Kleben, Klipsen, eine Steckverbindung oder dergleichen erfolgen. Das andere Ende 50 des in der Draufsicht gesehen etwa U-förmigen Tragteils 49 ist mit dem Verstellglied 11 durch Klipsen oder dergleichen fest verbunden. Das Tragteil 49 könnte auch einstückig mit dem Verstellglied 11 ausgebildet sein. Ferner liegt das Deformationselement 9 abschnittsweise am Kopfabschnitt 8 der Befestigungsschraube 3 auf.

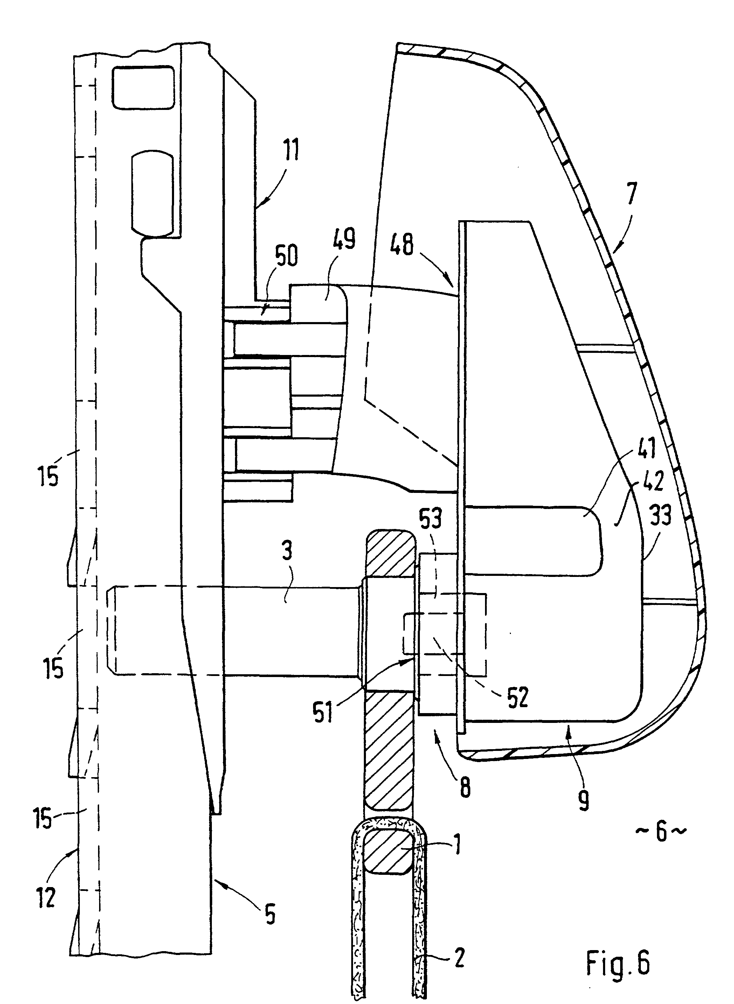

Damit bei einem Aufprallstoß ein seitliches Verschieben des Deformationselementes 9 vermieden wird, ist zwischen dem Deformationselement 9 und der Befestigungsschraube 3 eine Fixiereinrichtung 51 vorgesehen (Fig. 6). Gemäß einer ersten Ausführungsform umfasst diese einen an der Grundplatte 20 angebrachten vorstehenden Fixierungsbolzen 52, der in eine am Kopfabschnitt 8 der Befestigungsschraube 3 angeordnete Bohrung 53 eingreift. Die Bohrung 53 kann dabei einen etwas größeren Durchmesser aufweisen als der Außendurchmesser des Fixierungsbolzens 52. Die Fixierungseinrichtung 51 könnte aber auch durch eine Schraube gebildet werden, die sich kopfseitig an der Grundplatte abstützt und die in eine Gewindebohrung der Befestigungsschraube 3 für den Umlenkbeschlag 1 eingedreht ist.

Die Abdeckkappe 7 aus Kunststoff (z.B. PC, ABS) ist am Deformationselement 9 befestigbar, beispielsweise durch Klipsen.

Die ausgesparten Bereiche von Grundplatte 20 und Deformationskörper 21 zwischen den seitlichen Schenkeln 24, 25 bzw. 43, 44 der U-förmigen Abschnitte 22 bzw. 39 dienen zur Aufnahme des schwenkbaren Betätigungsgliedes 16 des Gurthöhenverstellers 5. Der äußere Bereich des Betätigungsgliedes 16 ist der Form der Abdeckkappe 7 angepasst, so dass das Betätigungsglied 16 bei verriegeltem Gurthöhenversteller 5 oberflächenbündig zur Abdeckkappe 7 verläuft.

## Patentansprüche

1. Umlenkbeschlag für Sicherheitsgurte von Fahrzeugen, insbesondere Kraftfahrzeugen, der mittels einer Befestigungsschraube in Lage gehalten ist, wobei ein Kopfabschnitt der Befestigungsschraube und zumindest ein Teilbereich des Umlenkbeschlages zum Fahrgastraum hin von einer Abdeckkappe verkleidet sind, und zwischen dem Kopfabschnitt der Befestigungsschraube und der vorgelagerten Abdeckkappe ein aus dünnwandigem Blech gefertigtes, hohlkörperartiges Deformationselement zwischengeschaltet ist, **dadurch gekennzeichnet, daß** das Deformationselement (9) mehrstückig ausgebildet ist.

2. Umlenkbeschlag nach Anspruch 1, **dadurch gekennzeichnet, daß** das Deformationselement (9) aus einer Grundplatte (20) und einem auf die Grundplatte (20) aufgesetzten Deformationskörper (21) besteht.

3. Umlenkbeschlag nach Anspruch 2, **dadurch gekennzeichnet, daß** die Grundplatte (20) und der Deformationskörper (21) durch Bördeln, Schweißen, Kleben oder andere bekannten Arten miteinander verbunden sind.

4. Umlenkbeschlag nach Anspruch 1, **dadurch gekennzeichnet, daß** die Abdeckkappe (7) am Deformationselement (9) befestigbar ist.

5. Umlenkbeschlag nach einem der vorangegangenen Ansprüche, **dadurch gekennzeichnet, daß** der Deformationskörper (9) eine zumindest abschnittsweise etwa parallel zur Grundplatte (20) ausgerichtete Aufprallfläche (33) aufweist, die über etwa senkrecht zur Grundplatte (20) sich erstreckende Seitenwände (34, 35, 36, 37, 38) an der Grundplatte (20) abgestützt ist.

6. Umlenkbeschlag nach Anspruch 5, **dadurch gekennzeichnet, daß** zwischen den aneinandergesetzten Seitenwänden (34, 35, 36, 37) Aussparungen (41, 41') vorgesehen sind.

7. Umlenkbeschlag nach Anspruch 5, **dadurch gekennzeichnet, daß** an einer oder mehreren Seitenwänden (34, 35, 36, 37, 38) örtlich definierte Schwächungsbereiche (47) vorgesehen sind.

8. Umlenkbeschlag für Sicherheitsgurte von Fahrzeugen, insbesondere Kraftfahrzeugen, bei denen der Umlenkbeschlag (1) an einem Gurthöhenversteller (5) angebracht ist, der sich aus einer am Aufbau befestigten Halteschiene (12) und einem auf der Halteschiene (12) verschiebebeweglich angeordneten Verstellglied (11) zusammensetzt, wobei der Umlenkbeschlag (1) über eine Befestigungsschraube (3) am Verstellglied (11) befestigt ist, **dadurch gekennzeichnet, daß** ein Deformationselement (9) unter Zwischenschaltung eines Tragteiles (49) am Verstellglied (11) des Gurthöhenverstellers (5) in Lage gehalten ist und daß das Deformationselement (9) abschnittsweise am Kopfabschnitt (8) der Befestigungsschraube (3) aufliegt, wobei an der Grundplatte (20) des Deformationselements (9) ein vorstehender Fixierungsbolzen (52) angebracht ist, der in eine am Kopfabschnitt (8) der Befestigungsschraube (3) angeordnete Bohrung (53) eingreift.

9. Umlenkbeschlag nach einem der vorangegangenen Ansprüche, **dadurch gekennzeichnet, daß** an der Grundplatte (20), am Deformationskörper (21) und an der Abdeckkappe (7) jeweils freigeschnittene Bereiche ausgebildet sind, wobei ein am Verstellglied (11) schwenkbar gelagertes Betätigungselement (16) zur Verstellung des Gurthöhenverstellers (5) die freigeschnittenen Bereiche von Grundplatte (20) und Deformationskörper (21) durchsetzt.

## Claims

1. A guide fitting for safety belts of vehicles, in particular motor vehicles, which is held in position by means of a fastening bolt, wherein a head portion of the fastening bolt and at least one partial region of the guide fitting are covered by a covering cap towards the passenger compartment, and a deformation element in the form of a hollow body and produced from thin-walled metal sheet is interposed between the head portion of the fastening bolt and the covering cap situated in front, **characterized in that** the deformation element (9) is formed in a multiplicity of parts.

2. A guide fitting according to Claim 1, **characterized in that** the deformation element (9) comprises a base plate (20) and a deformation member (21) positioned on the base plate (20).

3. A guide fitting according to Claim 2, **characterized in that** the base plate (20) and the deformation member (21) are connected each other by flanging-over, welding, adhesion or in other known ways.

4. A guide fitting according to Claim 1, **characterized in that** the covering cap (7) can be fastened to the deformation element (9).

5. A guide fitting according to one of the preceding Claims, **characterized in that** the deformation element (9) has an impact face (33) which is directed substantially parallel to the base plate (20) at least in part and which is supported on the base plate (20) by way of lateral walls (34, 35, 36, 37, 38) extending substantially at rights angles to the base plate (20).

6. A guide fitting according to Claim 5, **characterized in that** apertures (41, 41') are provided between the adjacent lateral walls (34, 35, 36, 37).

7. A guide fitting according to Claim 5, **characterized in that** locally defined areas of weakness (47) are provided on one or more lateral walls (34, 35, 36, 37, 38).

8. A guide fitting for safety belts of vehicles, in particular motor vehicles, in which the guide fitting (1) is mounted on a belt-height adjustment means (5) which is formed by a holding rail (12) fastened to the body and a displacement member (11) arranged so as to be displaceably movable on the holding rail (12), wherein the guide fitting (1) is fastened to the displacement member (11) by way of a fastening bolt (3), **characterized in that** a deformation element (9) is held in position on the displacement member (11) of the belt-height adjustment means (5) with the interposition of a support part (49), and the deformation element (9) rests in part upon the head portion (8) of the fastening bolt (3), wherein a projecting fixing pin (52), which engages in a bore (53) provided in the head portion (8) of the fastening bolt (3), is attached to the base plate (20) of the deformation element (9).

9. A guide fitting according to one of the preceding Claims, **characterized in that** cut-through areas are formed in each case on the base plate (20), on the deformation element (21) and on the covering cap (7), wherein an actuating element (16) - mounted in a pivotable manner on the displacement member (11) - for displacing the belt-height adjustment means (5) passes through the cut-through areas of the base plate (20) and the deformation element (21).

## Revendications

1. Ferrure de renvoi pour ceintures de sécurité de véhicules, en particulier de véhicules automobiles, qui est maintenue en position au moyen d'une vis de fixation, une portion de tête de la vis de fixation et au moins une zone partielle de la ferrure de renvoi étant recouvertes vers l'habitacle par un capuchon de recouvrement, et entre la portion de tête de la vis de fixation et le capuchon de recouvrement placé devant, est interposé un élément de déformation de type corps creux, fabriqué dans une tôle à paroi mince, **caractérisée en ce que** l'élément de déformation (9) est réalisé en plusieurs pièces.

2. Ferrure de renvoi selon la revendication 1, **caractérisée en ce que** l'élément de déformation (9) est constitué d'une plaque de base (20) et d'un corps de déformation (21) placé sur la plaque de base (20).

3. Ferrure de renvoi selon la revendication 2, **caractérisée en ce que** la plaque de base (20) et le corps de déformation (21) sont reliés entre eux par sertissage, soudage, collage, ou autre manière connue.

4. Ferrure de renvoi selon la revendication 1, **caractérisée en ce que** le capuchon de recouvrement (7) peut être fixé à l'élément de déformation (9).

5. Ferrure de renvoi selon l'une des revendications précédentes, **caractérisée en ce que** le corps de déformation (9) présente une surface de percussion (33) orientée au moins en partie approximativement parallèlement à la plaque de base (20), laquelle surface de percussion prend appui contre la plaque de base (20) par des parois latérales (34, 35, 36, 37, 38) s'étendant approximativement perpendiculairement à la plaque de base (20).

6. Ferrure de renvoi selon la revendication 5, **caractérisée en ce que** des découpes (41, 41') sont prévues entre les parois latérales (34, 35, 36, 37) juxtaposées.

7. Ferrure de renvoi selon la revendication 5, **caractérisée en ce que** des zones d'affaiblissement (47) définies localement sont prévues sur une ou plusieurs parois latérales (34, 35, 36, 37, 38).

8. Ferrure de renvoi pour ceintures de sécurité de véhicules, en particulier de véhicules automobiles, dans lesquelles la ferrure de renvoi (1) est placée sur un dispositif de réglage (5) de la hauteur de la ceinture, qui se compose d'un rail de maintien (12) fixé à la carrosserie et d'un organe de réglage (11) disposé coulissant sur le rail de maintien (12), la ferrure de renvoi (1) étant fixée à l'organe de réglage (11) par une vis de fixation (3), **caractérisée en ce qu'**un élément de déformation (9) est maintenu en position sur l'organe de réglage (11) du dispositif de réglage (5) de la hauteur de la ceinture, par interposition d'un élément de support (49), et **en ce que** l'élément de déformation (9) repose par endroits sur la portion de tête (8) de la vis de fixation (3), sur la plaque de base (20) de l'élément de déformation (9) étant placé un boulon de fixation (52) dépassant qui s'engage dans un perçage (53) disposé sur la portion de tête (8) de la vis de fixation (3).

9. Ferrure de renvoi selon l'une des revendications précédentes, **caractérisée en ce que** sur la plaque de base (20), sur le corps de déformation (21) et sur le capuchon de recouvrement (7) sont réalisées des zones découpées respectives, un élément d'actionnement (16) monté pivotant sur l'organe de réglage (11), destiné au réglage du dispositif de réglage (5) de la hauteur de la ceinture, traversant les zones découpées de la plaque de base (20) et du corps de déformation (21).
